# EUROPEAN PATENT APPLICATION

(11) **EP 4 769 523 A1**
(43) Date of publication of application: **01.07.2026**
(21) Application number: 25867177.5
(22) Date of filing: 01.10.2025
(51) Int. Cl.: H01M 4/131, H01M 4/505, H01M 4/525, H01M 4/62, H01M 10/052, H01M 4/02

(54) **POSITIVE ELECTRODE FOR SECONDARY BATTERY AND LITHIUM SECONDARY BATTERY INCLUDING SAME**

(30) Priority: 08.10.2024 KR 20240137160
(71) Applicant: LG Energy Solution, Ltd., Seoul 07335 (KR)
(72) Inventor: SIM, Hye Jin, Daejeon 34122 (KR); KIM, Tae Gon, Daejeon 34122 (KR); KIM, Young Seok, Daejeon 34122 (KR); JEONG, Jae Hoon, Daejeon 34122 (KR); LEE, Gil Ryeong, Daejeon 34122 (KR)
(74) Representative: Hoffmann Eitle
(86) International application number: PCT/KR2025/015717
(87) International publication number: WO 2026/079835

(57) **Abstract**

The present invention relates to a positive electrode for a secondary battery which includes a lithium transition metal oxide containing nickel; a first binder including a linear polymer; and a second binder including a branched polymer, wherein the linear polymer includes a hydrogen-bondable functional group, the branched polymer has 3.0 or less branches per 1,000 carbon atoms, and a weight ratio of the first binder to the second binder is in a range of 1:0.26 to 1:0.85, and a positive electrode and a lithium secondary battery which include the same.

## Description

### TECHNICAL FIELD

This application claims priority from Korean Patent Application No. 10-2024-0137160, filed on October 8, 2024, the disclosure of which is incorporated by reference herein.

The present invention relates to a positive electrode for a secondary battery, and a lithium secondary battery including the positive electrode for a secondary battery.

### BACKGROUND ART

Demand for secondary batteries as an energy source has been significantly increased as technology development and demand with respect to mobile devices have increased, and among these secondary batteries, lithium secondary batteries having high energy density, high operating potential, long cycle life, and low self-discharging rate have been commercialized and widely used.

An electrode of the lithium secondary battery is prepared by mixing a positive electrode active material or negative electrode active material with a binder resin component, dispersing the mixture in a solvent to prepare a slurry, applying the slurry onto a surface of an electrode current collector, drying it, and then forming a material mixture layer.

The binder binds the electrode active material having a size of a few micrometers to tens of micrometers and a conductive agent having a size of tens of nanometers, and helps an electrode coating layer adhere well to the electrode current collector. The most important property required for the binder is adhesion, wherein it should not dissolve at all even if swelling occurs in an environment with an excessive amount of an organic electrolyte solution, and should not decompose in an electrochemical oxidation or reduction environment.

Polyvinylidene fluoride (PVdF) having high electrochemical and thermal stability and good oxidation and chemical resistance has been conventionally used as the binder for a long time in a positive electrode. However, the PVdF has advantages such as excellent thermal stability, oxidation resistance, and chemical resistance, but problems, such as detachment of the electrode from the electrode current collector, may occur due to insufficient adhesion, and this may cause a degradation of battery characteristics, such as a reduction in capacity.

Thus, there is a need to develop a positive electrode for a secondary battery which includes a binder that may achieve an effect of improving performance of battery by providing excellent dispersibility and improved adhesion properties.

### [Prior Art Documents]

### [Patent Document]

(Patent Document 1) Korean Patent Application Laid-open Publication No. 2016-0039835

### DISCLOSURE OF THE INVENTION

### TECHNICAL PROBLEM

An object of the present invention is to provide a positive electrode for a secondary battery which may obtain an effect of improving electrochemical performance of the battery by including a binder capable of exhibiting excellent dispersibility and improved adhesion properties.

Another object of the present invention is to provide a lithium secondary battery including the positive electrode for a secondary battery.

### TECHNICAL SOLUTION

[1] The present invention provides a positive electrode for a secondary battery which includes a lithium transition metal oxide containing nickel; a first binder including a linear polymer; and a second binder including a branched polymer, wherein the linear polymer includes a hydrogen-bondable functional group, the branched polymer has 3.0 or less branches per 1,000 carbon atoms, and a weight ratio of the first binder to the second binder is in a range of 1:0.26 to 1:0.85.
[2] The present invention provides the positive electrode for a secondary battery of [1] above, wherein the linear polymer includes at least one functional group selected from the group consisting of -COOH, -OH, -COONH-, -NHCONH-, and -O-.
[3] The present invention provides the positive electrode for a secondary battery of any one or more of [1] and [2] above, wherein the branched polymer includes at least one functional group selected from the group consisting of - OH, -O-, -CO-, -COO-, aryl, and arylene.
[4] The present invention provides the positive electrode for a secondary battery of any one or more of [1] or [3] above, wherein the linear polymer is a polyvinylidene fluoride (PVdF)-based polymer.
[5] The present invention provides the positive electrode for a secondary battery of any one or more of [1] to [4] above, wherein the linear polymer has a weight-average molecular weight of 300,000 g/mol to 2,000,000 g/mol.
[6] The present invention provides the positive electrode for a secondary battery of any one or more [1] to [5] above, wherein the branched polymer is a PVdF-based polymer.
[7] The present invention provides the positive electrode for a secondary battery of any one or more of [1] to [6] above, wherein the branched polymer has a weight-average molecular weight of 600,000 g/mol to 2,000,000 g/mol.
[8] The present invention provides the positive electrode for a secondary battery of any one or more of [1] to [7] above, wherein the branched polymer has a long-chain branch.
[9] The present invention provides the positive electrode for a secondary battery of any one or more of [1] to [8] above, wherein the weight ratio of the first binder to the second binder is in a range of 1:0.33 to 1:0.67.
[10] The present invention provides the positive electrode for a secondary battery of any one or more of [1] to [9] above, wherein the positive electrode further includes a conductive agent.
[11] The present invention provides the positive electrode for a secondary battery of any one or more of [1] to [10] above, wherein an amount of nickel (Ni) among transition metals in the lithium transition metal oxide is 80 mol% or more.
[12] The present invention provides the positive electrode for a secondary battery of any one or more of [1] to [11] above, wherein the lithium transition metal oxide is represented by Formula 1:

   [Formula 1] Li₁₊ₓ(NiₐCo_{b}Mn_{c})₁₋ₓO₂

   In Formula 1, -0.3≤x≤0.3, 0.8≤a<1, 0<b<0.2, 0<c<0.2, and a+b+c=1.
[13] The present invention provides a lithium secondary battery including the positive electrode for a secondary battery of any one or more of [1] to [12] above.

### ADVANTAGEOUS EFFECTS

A positive electrode for a secondary battery according to the present invention includes a first binder including a linear polymer and a second binder including a branched polymer, wherein since the linear polymer includes a functional group involved in adhesion properties and the branched polymer has a structure with high solvent affinity involved in dispersibility, the binder may be uniformly dispersed to exhibit improved adhesion properties. Accordingly, since the positive electrode for a secondary battery, which includes the first binder and the second binder together in a predetermined weight ratio, exhibits high electrode adhesion along with excellent electrode uniformity, it may exhibit more stable and improved electrochemical performance, and thus, it may be usefully used in preparation of a lithium secondary battery.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

Unless defined otherwise, all terms (including technical and scientific terms) used herein may be intended to have meanings understood by those skilled in the art. In addition, terms defined in general dictionaries should not be interpreted abnormally or exaggeratedly, unless clearly specifically defined.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

In this specification, when it is said that a part includes a certain component, it means that other components may be further included rather than excluding other components unless specifically stated to the contrary.

The description of "A and/or B" in this specification means A, or B, or A and B.

In this specification, the expression "%" denotes wt% unless explicitly stated otherwise.

In this specification, a "weight-average molecular weight" may be measured using gel permeation chromatography (GPC). For example, a sample having a predetermined concentration is prepared, and a GPC measurement instrument is then stabilized. When the instrument is stabilized, a standard sample and the sample are injected into the instrument to obtain a chromatogram, and a molecular weight is then calculated using an analytical method.

### Positive Electrode for Secondary Battery

A positive electrode for a secondary battery according to an embodiment of the present invention includes a lithium transition metal oxide containing nickel; a first binder including a linear polymer; and a second binder including a branched polymer, wherein the linear polymer includes a hydrogen-bondable functional group, the branched polymer has 3.0 or less branches per 1,000 carbon atoms, and a weight ratio of the first binder to the second binder is in a range of 1:0.26 to 1:0.85.

Since the first binder includes a linear polymer exhibiting excellent adhesion properties by including the hydrogen-bondable functional group and the second binder includes a branched polymer having 0.5 or less branches per 1,000 carbon atoms which may exhibit excellent dispersibility due to high solvent affinity, the positive electrode for a secondary battery of the present invention, which includes both of these binders, may allow a positive electrode active material layer to exhibit improved adhesion properties and also to exhibit more stable and improved electrochemical properties.

The linear polymer includes a hydrogen-bondable functional group, wherein the hydrogen-bondable functional group may include at least one selected from the group consisting of -COOH, -OH, -COONH-, -NHCONH-, and -O-, and may specifically include -COOH and -OH. The functional group may be included in an amount of 0.01 mol% to 10 mol%, specifically 0.1 mol% to 8 mol%, and more specifically 1 mol% to 5 mol% based on the linear polymer. Since the hydrogen-bondable functional group is included in a chain structure of the linear polymer to form a hydrogen bond with a hydroxyl group on a surface of an aluminum current collector and a surface of an active material, it may improve adhesiveness as a binder.

The amount of the hydrogen-bondable functional group may be confirmed by measuring an elemental composition ratio using X-ray photoelectron spectroscopy (XPS).

The linear polymer may be a polyvinylidene fluoride (PVdF)-based polymer. The PVdF-based polymer may contain 60 wt% or more, 70 wt% or more, 80 wt% or more, or 90 wt% or more of vinylidene fluoride units in the polymer.

In an embodiment of the present invention, the first binder including the linear polymer may be a PVdF-based binder. A weight-average molecular weight of the linear polymer may be in a range of 300,000 g/mol to 2,000,000 g/mol, specifically 400,000 g/mol to 1,700,000 g/mol or 500,000 g/mol to 1,500,000 g/mol, and more specifically 800,000 g/mol to 1,000,000 g/mol. In a case in which the first binder includes the linear polymer satisfying the above weight-average molecular weight, a further improved effect of increasing adhesion may be achieved. In a case in which the weight-average molecular weight of the linear polymer is small, since viscosity of a positive electrode slurry containing the same may decrease, phase separation may occur and an adhesion effect between the positive electrode active material layer and the current collector may be reduced. Also, in a case in which the weight-average molecular weight of the linear polymer is large, uniformity of quality of a positive electrode prepared by using the same may be reduced by shifting phase stability of the positive electrode slurry containing the linear polymer to a high-elasticity region.

The branched polymer may have 3.0 or less branches per 1,000 carbon atoms, wherein the branched polymer may specifically have 0.1 to 3.0 branches per 1,000 carbon atoms, and may more specifically have 1 to 2.5 branches per 1,000 carbon atoms. In a case in which the second binder includes a branched polymer satisfying the above number of branches, since the branched polymer may increase solvent affinity of the binder, excellent dispersibility in the positive electrode slurry may be exhibited and a stable dispersed phase may be formed. In contrast, in a case in which the second binder includes a linear polymer that does not include branches rather than the branched polymer, the binders may locally aggregate within the positive electrode slurry, and accordingly, interfacial adhesion may be reduced. Also, in a case in which the number of branches of the branched polymer is outside the above range, the solvent affinity of the branched polymer may be reduced, and the adhesion may be reduced.

The number of branches per 1,000 carbon atoms may be obtained by a method in which the branched polymer is analyzed using Fourier transform infrared analysis (FT-IR) to derive a distribution curve of the number of branches per 1,000 carbon atoms (right Y-axis) according to a molecular weight (X-axis) of the branched polymer, the overall number of branches is measured, and an average value thereof is then calculated, or may be measured by a known method using nuclear magnetic resonance (NMR).

The branched polymer may have a long-chain branch on an aliphatic main chain, may include one or more functional groups selected from the group consisting of -OH, -O-, -CO-, -COO-, aryl, and arylene within a chain structure, and may specifically include -O- and -CO-. The functional group may be included in an amount of 0.01 mol% to 10 mol% based on the branched polymer, and may specifically be included in an amount of 0.1 mol% to 5 mol%, more specifically, 1 mol% to 3 mol%.

In a case in which the branched polymer includes the functional group in the chain structure while having the long-chain branch on the aliphatic main chain, it may maintain stable dispersibility in an electrode slurry state by increasing the solvent affinity, may minimize volume expansion of the positive electrode active material layer which may be caused by an electrolyte solution in the battery, and may improve battery performance by forming a uniform ion-conduction path.

The branched polymer may be a PVdF-based polymer. The PVdF-based polymer may contain 60 wt% or more, 70 wt% or more, 80 wt% or more, or 90 wt% or more of vinylidene fluoride units in the polymer.

In an embodiment of the present invention, the second binder including the branched polymer may be a PVdF-based binder. A weight-average molecular weight of the branched polymer may be in a range of 600,000 g/mol to 2,000,000 g/mol, specifically 800,000 g/mol to 1,700,000 g/mol or 1,000,000 g/mol to 1,500,000 g/mol, and more specifically 1,300,000 g/mol to 1,450,000 g/mol. In a case in which the second binder includes the branched polymer satisfying the above weight-average molecular weight, it may exhibit a viscosity-reduction effect by increasing the solvent affinity. In contrast, in a case in which the weight-average molecular weight of the branched polymer is small, phase separation may occur due to a decrease in viscosity of the positive electrode for a secondary battery and it may be difficult to properly achieve an effect of increasing dispersibility, and in a case in which the weight-average molecular weight of the branched polymer is large, output characteristics may degrade due to an increase in resistance of an electrode layer in the positive electrode for a secondary battery and the uniformity of quality of the electrode may be reduced by shitting the phase stability of the slurry to the high-elasticity region.

The "weight-average molecular weight" may be measured using gel permeation chromatography (GPC). For example, a sample having a predetermined concentration is prepared, and a GPC measurement instrument is then stabilized. When the instrument is stabilized, a standard sample and the sample are injected into the instrument to obtain a chromatogram, and the weight-average molecular weight is a polystyrene-equivalent value calculated using an analytical method.

The positive electrode for a secondary battery according to the embodiment of the present invention includes the first binder and the second binder in a weight ratio of 1:0.26 to 1:0.85, wherein the weight ratio of the first binder to the second binder may specifically be in a range of 1:0.30 to 1:0.70, more specifically, 1:0.33 to 1:0.67. In a case in which the weight ratio of the first binder to the second binder satisfies the above range, since the first binder capable of improving adhesion properties and the second binder capable of improving solvent affinity and dispersibility are appropriately combined and included in the positive electrode for the secondary battery, a performance improvement effect of a battery including both the first binder and the second binder may be more appropriately exhibited. In a case in which the weight ratio of the first binder to the second binder is outside the above range, wherein an amount of the first binder increases and an amount of the second binder decreases, gelation of the positive electrode slurry including them may occur, and electrode adhesion may be reduced due to the gelation of the positive electrode slurry despite the large amount of the first binder capable of improving adhesion properties. Also, in a case in which the weight ratio of the first binder to the second binder is outside the above range, wherein the amount of the first binder decreases and the amount of the second binder increases, dispersibility and storage stability of the positive electrode slurry including them are maintained, but the electrode adhesion may be reduced due to the relative decrease in the amount of the first binder.

The lithium transition metal oxide containing nickel, which is included in the positive electrode for a secondary battery according to the present invention, may be selected from the group consisting of lithium-nickel-based oxides, lithium-nickel-manganese-based oxides, lithium-nickel-cobalt-based oxides, and lithium-nickel-manganese-cobalt-based oxides, and may specifically include at least one selected from Li₁₊ₓ(NiₐCo_{b}Mn_{c})₁₋ₓO₂(0<a<1, 0<b<1, 0<c<1, -0.3≤x≤0.3, and a+b+c=1), Li(Ni_{d}CoₑMn_{f})O₄(0<d<2, 0<e<2, 0<f<2, d+e+f=2), Li_{g}NiO₂(0.5<g<1.3), LiNi₁₋ₕMₕO₂(M = cobalt (Co), manganese (Mn), aluminum (Al), copper (Cu), iron (Fe), magnesium (Mg), boron (B), or gallium (Ga), and 0≤h<1), LiMn_{2-y}Ni_{y}O₄(0<y<2), and LiMn_{2-z}Co_{z}O₄(0<Z<2).

Preferably, the lithium transition metal oxide is represented by Formula 1 below, and may include a lithium transition metal oxide having a nickel (Ni) content of 80% or more, 83% or more, or preferably 86% or more.

[Formula 1] Li₁₊ₓ(NiₐCo_{b}Mn_{c})₁₋ₓO₂

In Formula 1,
-0.3≤x≤0.3, 0.8≤a<1, 0<b<0.2, 0<c<0.2, and a+b+c=1.

In a case in which a lithium transition metal oxide having a nickel content of 80% or more is used as the lithium transition metal oxide as described above, high-capacity characteristics are exhibited, but generation of the hydroxyl group due to a reaction between nickel and moisture in the air may also increase as the nickel content of the lithium transition metal oxide increases. Accordingly, the higher the nickel content included in the lithium transition metal oxide, the more the gelation of a composition for forming a positive electrode including it may be accelerated.

Thus, gelation of the positive electrode for a secondary battery may be prevented along with improvement of the adhesion properties by using the second binder including the branched polymer capable of improving solvent affinity and dispersibility together with the first binder including the linear polymer capable of improving adhesion properties through hydrogen bonding with a hydroxyl group, as a binder.

The positive electrode may further include a conductive agent. Any conductive agent may be used without particular limitation so long as it has conductivity without causing chemical changes in the battery, and, for example, the conductive agent includes a point-type, line-type, or plate-type material having conductivity. For example, a conductive material, such as: graphite such as natural graphite or artificial graphite; carbon black such as acetylene black, Ketjen black, channel black, furnace black, lamp black, and thermal black; conductive fibers such as carbon fibers or metal fibers; conductive tubes such as carbon nanotubes; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used. Specific examples of a commercial conductive agent may be acetylene black-based products (Chevron Chemical Company, Denka black (Denka Singapore Private Limited), or Gulf Oil Company), Ketjen black, ethylene carbonate (EC)-based products (Armak Company), Vulcan XC-72 (Cabot Company), and Super P (Timcal Graphite & Carbon).

The positive electrode may further include a positive electrode collector, and may include a positive electrode active material layer formed on the positive electrode collector. The positive electrode active material layer may include the lithium transition metal oxide containing nickel, the first binder, and the second binder, and may specifically include the lithium transition metal oxide containing nickel, the first binder, the second binder, and the conductive agent.

The positive electrode collector is not particularly limited as long as it has conductivity without causing chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode collector may generally have a thickness of 3 µm to 500 µm.

In an embodiment of the present invention, the positive electrode active material may be included in an amount of 80 wt% to 99.6 wt% based on a total weight of the positive electrode active material layer, the binder may be included in an amount of 0.1 wt% to 19.9 wt% based on the total weight of the positive electrode active material layer, and the conductive agent may be included in an amount of 0.1 wt% to 19.9 wt% based on the total weight of the positive electrode active material layer.

In an embodiment of the present invention, the positive electrode active material may be included in an amount of 90 wt% to 99.5 wt% based on the total weight of the positive electrode active material layer, the binder may be included in an amount of 0.1 wt% to 9.9 wt% based on the total weight of the positive electrode active material layer, and the conductive agent may be included in an amount of 0.1 wt% to 9.9 wt% based on the total weight of the positive electrode active material layer.

In an embodiment of the present invention, the positive electrode active material may be included in an amount of 90 wt% to 99.5 wt% based on the total weight of the positive electrode active material layer, the binder may be included in an amount of 0.1 wt% to 5 wt% based on the total weight of the positive electrode active material layer, and the conductive agent may be included in an amount of 0.1 wt% to 5 wt% based on the total weight of the positive electrode active material layer.

After a positive electrode slurry is prepared by adding the positive electrode active material and an additive including the binder and optionally the conductive agent to a solvent, the positive electrode active material layer may be prepared by applying the slurry onto the positive electrode collector, and drying and rolling the positive electrode collector.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content including the positive electrode active material as well as optionally the binder and the conductive agent is in a range of 50 wt% to 95 wt%, preferably, 70 wt% to 90 wt%.

The positive electrode for a secondary battery according to the present invention may be prepared in air, and even if the lithium transition metal oxide containing nickel, which is included in the positive electrode for a secondary battery, increases pH while reacting with moisture included in the air to form a hydroxyl group, the gelation of the positive electrode for a secondary battery is suppressed by including the second binder together as described above, and accordingly, the viscosity of the positive electrode for a secondary battery may not increase.

### Lithium Secondary Battery

Furthermore, the present invention provides an electrochemical device including the positive electrode. The electrochemical device may specifically be a battery or a capacitor, and may more specifically be a lithium secondary battery.

The lithium secondary battery specifically includes a positive electrode, a negative electrode disposed to face the positive electrode, a separator disposed between the positive electrode and the negative electrode, and an electrolyte, and the positive electrode is the same as described above. Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a nonwoven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The binder is a component that assists in the binding between the conductive agent, the active material, and the current collector, wherein the binder may typically be added in an amount of 0.1 wt% to 10 wt% based on a total weight of the negative electrode active material layer. Examples of the binder may be polyvinylidene fluoride (PVDF), polyvinyl alcohol, carboxymethylcellulose (CMC), sodium carboxymethyl cellulose, starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof.

The conductive agent is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The negative electrode active material layer, for example, may be prepared by coating a composition for forming a negative electrode active material layer, which is prepared by dissolving or dispersing the negative electrode active material, the binder, and the conductive agent in a solvent, on the negative electrode collector and drying the coated negative electrode collector, or may also be prepared by casting the composition for forming a negative electrode active material layer on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methyl ethyl carbonate (MEC), ethyl methyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. Since the electrolyte may have appropriate conductivity and viscosity when the concentration of the lithium salt is included within the above range, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be preferably used as a unit cell in a medium and large sized battery module including a plurality of battery cells.

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

### Examples

### Example 1

### <Preparation of Positive Electrode Slurry>

Li(Ni_{0.86}Co_{0.08}Mn_{0.06})O₂; linear polyvinylidene fluoride (Mw: 900,000 g/mol, functional groups -COOH, -OH) having a functional group content of 3.6 mol%; branched polyvinylidene fluoride (Mw: 1,380,000 g/mol, functional groups -O-, -CO-) having 2.1 long-chain branches per 1,000 carbon atoms in a polymer chain and a functional group content of 2.0 mol%; and carbon nanotubes (CNTs) were added to NMP, as a solvent, in a weight ratio of 95:2.1:0.9:2 such that a concentration was 9 wt%, and stirred at 1,500 rpm for 2 hours at room temperature using a homo disper mixer to prepare a positive electrode slurry. The highest temperature measured during stirring was about 50°C.

### <Preparation of Positive Electrode for Secondary Battery>

The positive electrode slurry was applied to each 15 µm thick aluminum film, then dried at 150°C for 1 hour, and roll pressed to prepare a positive electrode for a secondary battery.

### Example 2: Preparation of Positive Electrode for Secondary Battery

A positive electrode slurry and a positive electrode for a secondary battery were prepared in the same manner as in Example 1 except that Li (Ni_{0.86}Co_{0.08}Mn_{0.06})O₂; linear polyvinylidene fluoride (functional groups -COOH, -OH) having a functional group content of 3.6 mol%; branched polyvinylidene fluoride (functional groups -O-, -CO-) having 2.1 long-chain branches per 1,000 carbon atoms in a polymer chain and a functional group content of 2.0 mol%; and CNTs were used in a weight ratio of 95:1.8:1.2:2.

### Comparative Example 1: Preparation of Positive Electrode for Secondary Battery

A positive electrode slurry and a positive electrode for a secondary battery were prepared in the same manner as in Example 1 except that Li(Ni₀.₈₆Co₀.₀₈Mn₀.₀₆)O₂; linear polyvinylidene fluoride (functional groups -COOH, -OH) having a functional group content of 3.6 mol%; and CNTs were used in a weight ratio of 95:3:2.

### Comparative Example 2: Preparation of Positive Electrode for Secondary Battery

A positive electrode slurry and a positive electrode for a secondary battery were prepared in the same manner as in Example 1 except that Li(Ni₀.₈₆Co₀.₀₈Mn₀.₀₈Mn₀.₀₆)O₂; linear polyvinylidene fluoride (functional groups -COOH, -OH) having a functional group content of 3.6 mol%; branched polyvinylidene fluoride (functional groups -O-, -CO-) having 2.1 long-chain branches per 1,000 carbon atoms in a polymer chain and a functional group content of 2.0 mol%; and CNTs were used in a weight ratio of 95:1.5:1.5:2.

### Comparative Example 3: Preparation of Positive Electrode for Secondary Battery

A positive electrode slurry and a positive electrode for a secondary battery were prepared in the same manner as in Example 1 except that Li(Ni₀.₈₆Co₀.₀₈Mn₀.₀₆)O₂; linear polyvinylidene fluoride (functional groups -COOH, -OH) having a functional group content of 3.6 mol%; branched polyvinylidene fluoride (functional groups -O-, -CO-) having 2.1 long-chain branches per 1,000 carbon atoms in a polymer chain and a functional group content of 3.6 mol%; and CNTs were used in a weight ratio of 95:2.25:0.75:2.

### Experimental Example 1: Storage Stability Evaluation

Each of the positive electrode slurries prepared in Examples 1 and 2 and Comparative Examples 1 to 3 was stored in an environment of 25°C for 7 days, and whether gelation occurred was then checked.

### Experimental Example 2: Adhesion Measurement

Each of the positive electrodes prepared in Examples 1 and 2 and Comparative Examples 1 to 3 was punched into a size of 150 mm × 20 mm, a positive electrode surface was then adhered to a slide glass with double-sided tape, and lamination was performed to prepare three samples for a peel test for each positive electrode.

### Adhesion Measurement

The above samples were loaded into a universal testing machine (UTM) at 20 mm intervals, a 90° peel test (propagation speed: 300 mm/min) was performed to measure peel resistance (gf/cm), adhesiveness of each electrode was calculated therefrom, and the results thereof are presented in Table 1 below.

### Experimental Example 3: Measurement of Capacity Retention

### Preparation of Half-Cells

Each of the positive electrodes for a secondary battery prepared in Examples 1 and 2 and Comparative Examples 1 to 3 was applied to a 15 µm thick aluminum thin film, then dried at 150°C for 1 hour, and roll pressed to prepare each positive electrode.

The above-prepared positive electrode was stacked with Li-metal (negative electrode) and a separator, and an electrolyte solution, in which 1 M LiPF₆ was dissolved in a solvent in which EC:DMC:EMC were mixed in a volume ratio of 1:2:1, was then injected to prepare lithium secondary batteries (coin half-cell) according to Examples 1 and 2 and Comparative Examples 1 to 3.

### Measurement of Capacity Retention

Each of the above-prepared lithium secondary batteries was charged at a constant current of 0.2 C to 4.2 V at 25°C with a 1/200 C cut-off. Thereafter, discharge was performed at a constant current of 0.2 C until the voltage reached 2.5 V. The charging and discharging were defined as one cycle, and this cycle was repeated 100 times.

Also, each of the above-prepared lithium secondary batteries was charged at a constant current of 0.2 C to 4.2 V at 25°C with a 1/200C cut-off, and then discharged at a constant current of 0.2 C to 2.5 V to measure initial discharge capacity. Next, the lithium secondary battery was charged at a constant current of 0.2 C to 4.2 V at 5°C with a 1/200 C cut-off, stored at 60°C for 4 weeks, and then discharged at a constant current of 0.2 C to 2.5 V to measure discharge capacity, and the discharge capacity after 4 weeks was thus measured.

**[Table 1]**

| | First binder: second binder | Adhesion (gf/mm) | Slurry storage stability | Cell capacity retention (%) | |
|---|---|---|---|---|---|
| | | | | After 100 cycles at room temperature | After storage at 60°C for 4 weeks |
| Example 1 | 70:30 | 2.51 | Good | 98.7 | 98.2 |
| Example 2 | 60:40 | 2.12 | Good | 99.1 | 98.9 |
| Comparative Example 1 | 50:50 | 1.37 | Good | 90.6 | 93.8 |
| Comparative Example 2 | 80:20 | 1.57 | Gelation | 88.7 | 89.2 |
| Comparative Example 3 | 100:0 | 1.44 | Gelation | 83.5 | 85.5 |

Referring to Table 1, the positive electrodes for a secondary battery of Examples 1 and 2 had excellent adhesion in comparison to the positive electrodes for a secondary battery of Comparative Examples 1 to 3 while having excellent storage stability. Also, when the positive electrodes and the lithium secondary batteries were prepared by using the same, it may be confirmed that cycle characteristics and capacity characteristics after high-temperature storage were also excellent. In contrast, in a case in which the amount of the first binder was excessively decreased in comparison to the amount of the second binder as in Comparative Example 1, slurry storage stability was excellent, but it may be confirmed that adhesion was significantly reduced because the amount of the first binder related to the adhesion was low. Also, in a case in which the amount of the second binder was excessively decreased in comparison to the amount of the first binder as in Comparative Example 2, it may be confirmed that gelation occurred because storage stability of the slurry was reduced due to the small amount of the second binder related to the stability of the slurry, and adhesion was also reduced as dispersibility of the binder was also reduced. Furthermore, with respect to Comparative Example 3 that did not include the second binder, it may be confirmed that, similar to Comparative Example 2, gelation occurred because storage stability of the slurry was reduced, and adhesion was also reduced as dispersibility of the binder was also reduced.

## Claims

1. A positive electrode for a secondary battery, the positive electrode comprising:
a lithium transition metal oxide containing nickel;
a first binder including a linear polymer; and
a second binder including a branched polymer,
wherein the linear polymer comprises a hydrogen-bondable functional group,
the branched polymer has 3.0 or less branches per 1,000 carbon atoms, and
a weight ratio of the first binder to the second binder is in a range of 1:0.26 to 1:0.85.

2. The positive electrode for a secondary battery of claim 1, wherein the linear polymer comprises at least one functional group selected from the group consisting of -COOH, -OH, - COONH-, -NHCONH-, and -O-.

3. The positive electrode for a secondary battery of claim 1, wherein the branched polymer comprises at least one functional group selected from the group consisting of -OH, - O-, -CO-, -COO-, aryl, and arylene.

4. The positive electrode for a secondary battery of claim 1, wherein the linear polymer is a polyvinylidene fluoride (PVdF)-based polymer.

5. The positive electrode for a secondary battery of claim 1, wherein the linear polymer has a weight-average molecular weight of 300,000 g/mol to 2,000,000 g/mol.

6. The positive electrode for a secondary battery of claim 1, wherein the branched polymer is a PVdF-based polymer.

7. The positive electrode for a secondary battery of claim 1, wherein the branched polymer has a weight-average molecular weight of 600,000 g/mol to 2,000,000 g/mol.

8. The positive electrode for a secondary battery of claim 1, wherein the branched polymer has a long-chain branch.

9. The positive electrode for a secondary battery of claim 1, wherein the weight ratio of the first binder to the second binder is in a range of 1:0.33 to 1:0.67.

10. The positive electrode for a secondary battery of claim 1, further comprising a conductive agent.

11. The positive electrode for a secondary battery of claim 1, wherein an amount of nickel (Ni) among transition metals in the lithium transition metal oxide is 80 mol% or more.

12. The positive electrode for a secondary battery of claim 1, wherein the lithium transition metal oxide is represented by Formula 1:
[Formula 1] Li₁₊ₓ(NiₐCo_{b}Mn_{c})₁₋ₓO₂
wherein, in Formula 1,
-0.3≤x≤0.3, 0.8≤a<1, 0<b<0.2, 0<c<0.2, and a+b+c=1.

13. A lithium secondary battery comprising the positive electrode for a secondary battery of any one of claims 1 to 12.
